# EUROPEAN PATENT APPLICATION

(11) **EP 3 051 479 A1**
(43) Date of publication of application: **03.08.2016**
(21) Application number: 15461508.2
(22) Date of filing: 27.01.2015
(51) Int. Cl.: G06Q 20/40

(54) **Information technology system for the collection and sharing of information on fraud when making transactions on the web, and a method for collecting and processing, and make such information available**

(71) Applicant: Sensi Soft Sp. z o.o., 02-532 Warszawa (PL)
(72) Inventor: Batory, Stefan Dominik, 02-722 Warszawa (PL)
(74) Representative: Sielewiesiuk, Jakub

(57) **Abstract**

The invention is related to an anti-fraud computer system that is used when making online transactions, especially purchases of goods, through the collection and sharing of information about reported incidents, and that a fraud database, and web portal that allows users to publish and view information on suspected fraudulent activities by specific entities.

Invention also includes an API interface that allows communication between the user and the database and WEB interface showing query results in a neat manner, and how to collect, process and share data.

## Description

The invention is related to a system for combating fraud when making online transactions, purchase of goods, in particular through the collection and sharing of information about reported incidents.

Invention also includes an API interface that performs data operations on incidents and entities suspected of fraud, WEB interface that presents user query results in a neat manner and how to collect, process and share data.

According to our knowledge, there is currently no information system for collecting, publishing and viewing data of entities suspected of fraud/scam during internet transactions that is transparent and available to registered users from all countries.

The report "The Future Store 2012-2015" developed at the request of Visa Europe by the Center for Retail research suggests that internet trade will soon be around 19% of the total value of sales in Europe. Significant proportion of products will be sold by a variety of different auction sites or e-commerce companies (e.g. Allegro, eBay, Gumtree). Increasing volume of internet sales requires sellers to prevent fraud and scam opportunities. Activities of individual sites are based primarily on implementation of regulations and creating their own fraud and abuse databases, and tools to prevent fraudulent activities that could harm users' accounts. However, because of the image concerns such web portals do not publish summary information on observed fraud and scam, making it difficult to combat fraudsters operating in different countries. This problem was noted in Europe, which led among other things to create a Euro Label - European electronic commerce for consumers and retailers. Unfortunately, the popularity of the mark is limited, and, in addition, it defines sales standards without collection any information on fraud/scam, and entities committing them.

One possible solution that can foster exchanges of information between each other, and, consequently, faster identification and application of appropriate measures against fraud, would be to create an international database. Sensi Soft has created such database, which is the first such solution in the world and it is ready to be made available to interested web portals. An invention called "fraudbook" allows you to improve services offered by Sensi Soft in terms of creating and maintaining portals - better knowledge of fraud allows for more effective action against fraudsters.

Development and Internet accessibility is connected unfortunately with the increase in the number of fraud and scam committed with computer and network. Despite further technical security and legal regulations, users are still vulnerable and susceptible to attack by the various types of entities. The fight against internet fraud often proves futile and ineffective because of a lack of adequate tools, difficulty in collecting material evidence and technical capabilities.

To help fraud victims on the Internet, many web pages were created which are concerned with defining key areas of fraud/scam and offer advice on how to protect oneself against fraud. An example would be: http://www.consumerfraudreporting.org/, http://crimes-of-persuasion.com http://scamxposer.com/, http://scamvictimsunited.com

Thanks to the development of online communities, quickly forums involving users - fraud victims were created. On those forums, users are able to share their experiences and information regarding scam and fraud. An example of such for may be: http://scamwarners.com, http://419eater.com

Many auction sites and e-commerce companies have created internal mechanisms and tools to effectively combat fraud and take care of safety of their users and internet transactions. An example would be the largest auction sites: http://www.ebay.com, http://amazon.com, http://ubid.com, http://www.allegro.pl

We should also mention portals which like our invention, are specialized in gathering information about their abuse and fraud, and how to properly process it and aggregate for. Portals often take actions involving the notification of law enforcement of the committed offense or to bring criminal proceedings against fraudsters, if the local law allows it and there is relevant evidence collected.

Unfortunately, these portals operate mostly in the United States. An example would be: http://consumeraffairs.com, http://ripoffreport.com, http://pissedconsumer.com, http://complaints.com http://www.scambook.com/

It is also worth to mention, that in many countries, the police and similar services have developed specialized teams within to monitor, and detect internet fraud, and to take various preventive measures. The best example of this is the Federal Bureau of Investigation (FBI - http://www.fbi.gov/scams-safety/fraud).

We are not aware of any specialized teams dedicated to monitoring internet fraud in Polish police force.

According to the Invention, the system for collecting and sharing information on fraud when making transactions on the web, is characterized in that it includes a database of information on fraud and web portal that allows users to add and view information on fraud committed by specific entities.

Preferably, it includes the following components:
a. Repository, in which data is collected, preferably in a form of relational database maintained on the server PostgreSQL 9.1;
b. Programmable API technology developed in REST, allowing communication between repository and users.
c. WEB Interface - a customer of programmable API.

Also, according to the Invention a method for collection and processing of data on fraud when making online transactions in the system is characterized in that it comprises the following steps:
- User sends scam report by filling in the application form the WEB interface to the API interface
- API transfers the scam report to the repository,
- Save the scam report in the repository, and this step involves the following actions:
   a. Creating a new entity, if the entity with the specified by the user name does not exist in the repository.
   b. Sending graphics files to the repository provided in the WEB interface application form and their processing, in particular scale, creating a thumbnail.
   c. Saving the new report in the repository and connecting it with the entity and sent graphic files.

Preferably, API interface which mediates communication between repository and customers provides the following functionality for specified queries:
a. Topscammers - view the list of 5 entities suspected of most fraud/scams.
b. Complete - display a list of all entities suspected of abuse, together with the possibility to filter and sort by adding suitable fields in the query.
c. Alert - returning a list of fraud in the context of operator (suspected of abuse).
d. Scammer - display a list of all identified and confirmed entities committing fraud/scam.
e. Flatpage - display all servers' static pages by prototype.
f. User - view all trusted users, who use the system according to invention.
g. Alertcategory - view complete list of categories, to which the scam reports may qualify.

Preferably, WEB interface, a customer of programmable API consists of the following components:
a. Navigation bar.
b. Home Page.
c. Login form.
d. Scam alerts.
e. Scammers listing.
f. Alerts listing for particular entity.
g. Report details.
h. Details of company.
i. Report a fraud form.

Preferably, the navigation bar appears at the top of each individual landing page and contains references to the most essential service components, such as:
a. Home Page.
b. Scam alerts.
c. Scammers listing.
d. Login form.
e. Static pages.

Preferably, the main page contains references to the most essential service elements, and includes the following components:
a. Listing of 10 latest scam alerts.
b. Listing of 5 entities, which collected the most scam alerts.
c. The search form.
d. Links to static pages.
e. Promotional texts.

Preferably, the alert listings are presented in the form of blocks, containing the following parts:
a. Scam alert name.
b. Logo of the reported company (scammer).
c. Nickname of the person reporting the alert.
d. Date of the scam alert.
e. Place where the scam/fraud took place.
f. The categories for which the alert qualified.
g. A description of the event.
h. Information about the date of an event (fraud/scam).
i. Button to view the details of the alert.
j. Button to view related complaints.

Preferably, the scammer listing is presented in the form of blocks containing the following parts:
a. Scammers name.
b. Logo of the reported company (scammer).
c. Contact details (in summary form).
d. Button to view scammer's information.
e. Button to view related complaints.

Preferably, the details of the scam alert are presented in the form of blocks, containing the following:
a. The name of the alert.
b. Logo of the reported company (scammer).
c. Nickname of the person reporting the alert.
d. Date of the scam alert.
e. Place where the fraud/scam took place) - usually address.
f. The categories for which the alert qualified.
g. A description of the event.
h. Information about the date of an event (fraud/scam).
i. Button to view the details of the scam alert.
j. Button to view the related complaints.

Preferably, alert details - subpage presenting detailed information of the aforementioned scam report and scammer(s) shall include, in particular:
a. Alert Title.
b. Logo of reported company (scammer).
c. Date the alert was created.
d. Information about the alert author.
e. Information about location of the alert (fraud, abuse).
f. Information about categories, for which alert has qualified.
g. A description of the event (fraud, abuse).
h. Information about the scammer:
i. The name of the scammer (company/person).
   ii. Contact Information (address, region, phone numbers, and web address).
   i. A list of up to 10 other alerts relating to the scammers.

Preferably, details of scammers listing - subpage presenting detailed information relating to a specific scammer (person or company), includes in particular:
a. Name of the scammer.
b. Logo of the reported scammer (person or company).
c. Information on the number of submitted alerts related to the scammer.
d. The date of the last activity (the latest alert).
e. A summary description of the scammer, activity, damage caused by activities, actions undertaken, etc.
f. The contact details (address, region, telephone numbers, email addresses, web pages, etc.).
g. A list of up to 10 latest alerts related to the scammer.

Preferably, the report a fraud form in WEB interface where a registered user (a fraud/scam victim) can create a scam/fraud alert, allows you to enter the following information:
a. Name of the scammer (company or person).
b. The scam alert name.
c. Description of the event.
d. Location of the event.
e. Date of the event.
f. Monetary damages caused by the event.
g. Images, photos documenting an event.
h. Category of the event.

In addition, the information from the repository is available for users around the world, provided the connection with the appropriate portal and the establishment of the personal account.

### Preferred embodiment

Preferred embodiment of the invention is presented in the attached pictures of prototype solutions;
Figs. 1- is a schematic diagram of the invention, showing communication between parts of the system
Figs. 2- Shows the prototype design of the navigation bar, present in all landing pages of WEB interface
Figs. 3 - Shows an example of the home page
Figs. 4 - shows an example of the login screen to the system
Figs. 5 - shows an example of the part of the subpage for scam alerts
Figs. 6 - Shows an example of the part of the subpage related to scammers listing

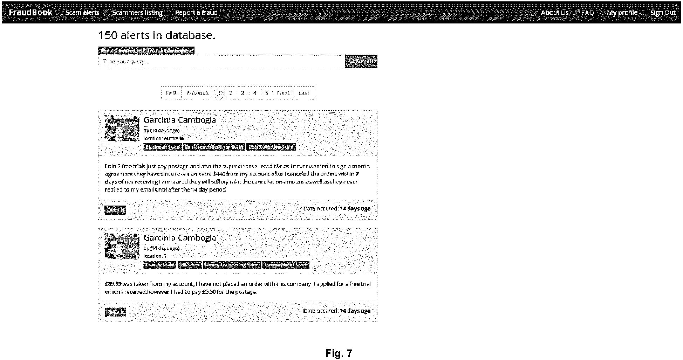

Figs. 7 - Shows an example of the subpage that presents details of alert

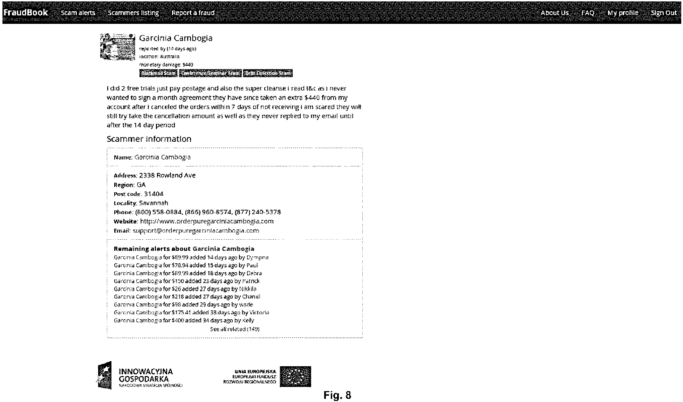

Figs. 8 - Shows an example of the subpage that presents details of the scammer
Figs. 9 - Shows an example of the subpage where user can fill out form to report a scam alert, with drop down menus that aid in choosing the name of the alert.
Figs. 10 - Shows an example of the subpage of the scam alert form filled with all the necessary data to complete the alert.

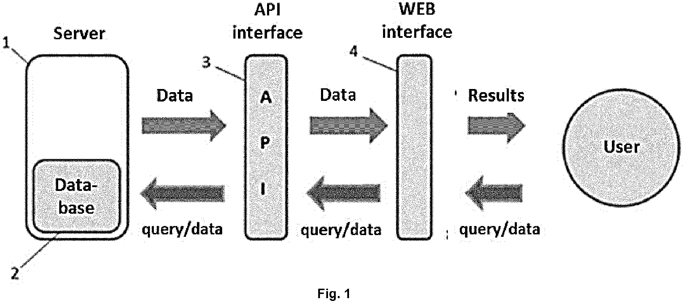

The implementation of the data operations related notifications of abuse between system components and the user is shown in the diagram (Fig. 1). Below are described the relevant features of such a system according to invention.

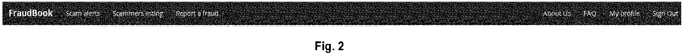

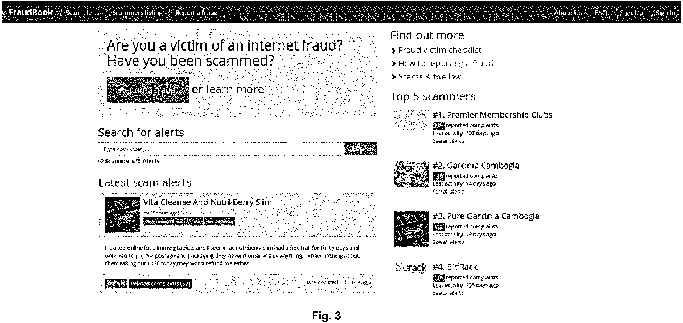

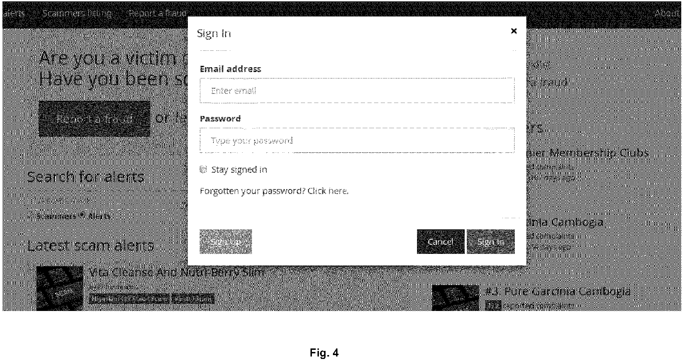

Connection to the user system is beneficial when you open a web page portal with a navigation bar (Fig. 2) located on the top of the home page (Fig. 3) and using the login screen (fig. 4) by logging in to an existing or newly created account, with password reminder option.

The system (Fig. 1) consists of programmable API interface (3), which converts queries or data entered by the user with the use of WEB interface (4), by sending them to a server (1) executing the database operations (2), contained in a server (1). Feedback from the server (1) is then processed by an API interface (3) and via WEB interface (4) presented to user in a neat visual form.

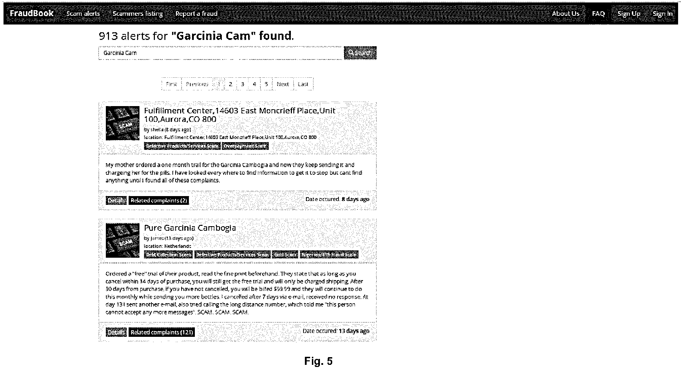

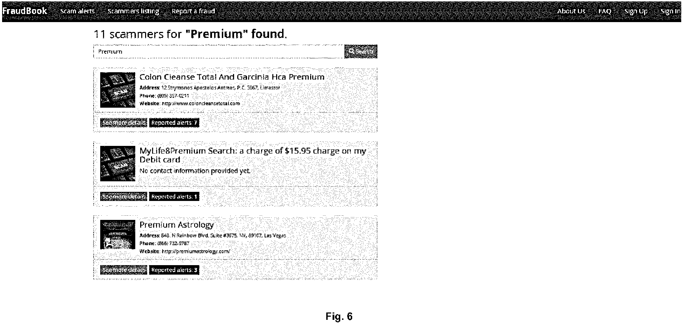

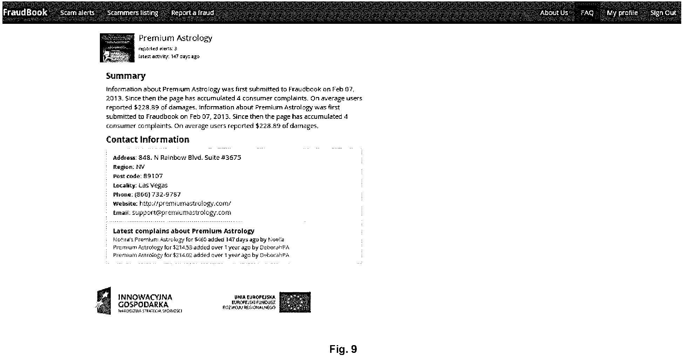

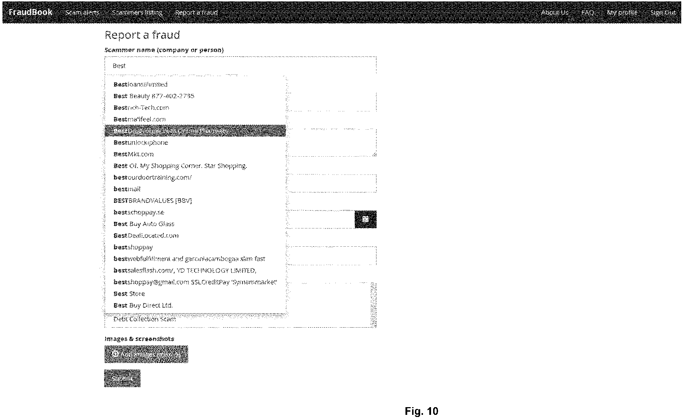

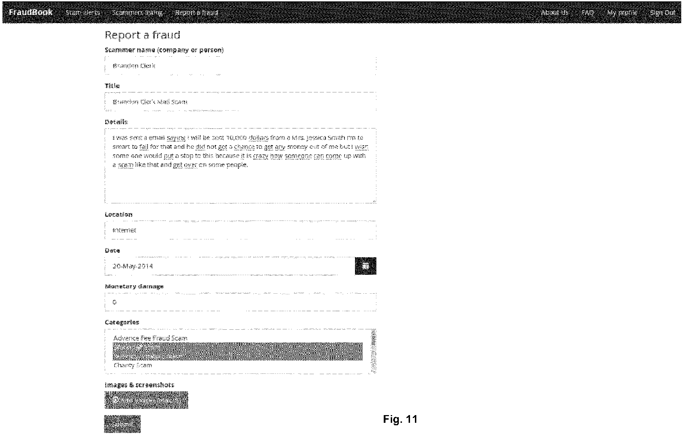

Functionality of API interface and WEB interface accordingly allows the user to publish and view fraud information in a convenient way, through subpages containing respectively selected and prepared data. Looking for information on fraudulent activities can be implemented through appropriate listings on activities page: scam alerts (Fig. 4), scammers (Fig. 5) or related complaints under scammers listing (Fig. 6). Presentation of the detailed information regarding fraudulent activity or scammers is possible through alert details (Fig. (7) and the details of scammers (Fig. (8). Logged on user can also report fraud using a form to send information about the incident (Fig. 9 - 10).

Accordingly, access to the system is not limited to just one company - the data collected in the repository can be used by all interested users, with access to the Internet and personal account on the portal, connected to the system according to invention.

## Claims

1. Computer system for collecting and sharing information on fraud when making transactions on the web, **characterized by** the fact that it includes a database of information on fraud and web portal that allows users to add and view information on fraud committed by specific entities.

2. The system according to claim 1 **characterized in that** it includes the following components:
a. Repository, in which data is collected, preferably in a form of relational database maintained on the server PostgreSQL 9.1;
b. Programmable API technology developed in REST, allowing communication between repository and users.
c. WEB Interface - a customer of programmable API.

3. A methods for collection and processing of data on fraud when making online transactions in the system according to claims 1 or 2, **characterized in that** it includes the following steps:
• User sends scam report by filling in the application form the WEB interface to the API interface
• API transfers the scam report to the repository,
• Save the scam report to the repository, and this step involves the following steps:
a. Create a new entity, if the entity with the specified by the user name does not exist in the repository.
b. Sending graphics files to the repository provided in the WEB interface application form and their processing, in particular scale, creating a thumbnail.
c. Saving the new report in the repository and connecting it with the entity and sent graphic files.

4. The methods according to claim 3, **characterized in that** the API interface, which mediates communication between repository and customers provides the following functionality for specified queries:
a. Topscammers - view the list of 5 entities suspected of most fraud/scams.
b. Complete - display a list of all entities suspected of abuse, together with the possibility to filter and sort by adding suitable fields in the query.
c. Alert - returning a list of fraud in the context of operator (suspected of abuse).
d. Scammer - display a list of all identified and confirmed entities committing fraud/scam.
e. Flatpage - display all servers' static pages by prototype.
f. User - view all trusted users, who use the system according to invention.
g. Alertcategory - view complete list of categories, to which the scam reports may qualify

5. The method according to claim 3 or 4, **characterized in that** WEB interface, a customer of programmable API comprises the following components:
a. Navigation bar.
b. Home Page.
c. Login form.
d. Scam alerts.
e. Scammers listing.
f. Alerts listing for particular entity.
g. Report details.
h. Details of the company.
i. Report a fraud form.

6. The methods according to claim 5 **characterized in that** a navigation bar appears at the top of each individual landing page and contains references to the most essential service components, such as:
a. Home Page.
b. Scam alerts.
c. Scammers listings.
d. Login form.
e. Static pages.

7. The method according to claim 5 or 6, **characterized in that** the main page contains references to the most essential service elements, and includes the following components:
a. Listing of 10 latest scam alerts.
b. Listing of 5 entities, which collected the most scam alerts.
c. The search form.
d. Links to static pages.
e. Promotional texts.

8. The method according to claims 5, 6, or 7 **characterized in that** the alert listings are presented in the form of blocks, containing the following parts:
a. The scam alert name.
b. Logo of the reported company (scammer)Pseudonym author notification
c. Nickname of the person reporting the alert.
d. Date of the scam alert.
e. Place where the scam/fraud took place.
f. The categories for which the alert qualified.
g. A description of the event.
h. Information about the date of an event (fraud/scam).
i. Button to view the details of the alert.
j. Button to view related complaints.

9. The method according to claim 5, 6, 7 or 8, **characterized in that** the scammer listing is presented in the form of blocks containing the following parts:
a. Scammers name.
b. Logo of the reported company (scammer).
c. Contact details (in summary form).
d. Button to view the details of the alert.
e. Button to view related complaints.

10. The method according to the claims from 5 to 9, **characterized in that** the details of the scam alert are presented in the form of blocks, containing the following:
a. The name of the alert.
b. Logo of the reported company (scammer).
c. Nickname of the person reporting the alert.
d. Date of the scam alert.
e. Place where the fraud/scam took place) - usually address.
f. The categories for which the alert qualified.
g. A description of the event.
h. Information about the date of an event (fraud/scam.
i. Button to view the details of the alert.
j. Button to view the related complaints.

11. The method according to the claims from 5 to 10, **characterized in that** alert details - subpage presenting detailed information of the aforementioned scam report and scammer(s) shall include, in particular:
a. Alert title.
b. Logo of reported company (scammer).
c. Date the alert was created.
d. Information about the alert author.
e. Information about location of the alert (fraud, abuse).
f. Information about categories, for which alert has qualified.
g. A description of the event (fraud and abuse).
h. Information about the scammer:
i. The name of the scammer (company/person).
ii. Contact information (address, region, phone numbers, and web address).
i. A list of up to 10 other alerts relating to the scammers.

12. The method according to the claims from 5 to 11, **characterized in that** details of scammers listing - subpage presenting detailed information relating to a specific scammer (person or company), includes in particular:
a. The name of the scammer.
b. Logo of the reported scammer (person or company).
c. Information on the number of submitted alerts related to the scammer.
d. The date of the last activity (the latest alert).
e. A summary description of the scammer, activity, damage caused by activities, actions undertaken, etc.
f. The contact details (address, region, telephone numbers, email addresses, web pages, etc.).
g. A list of up to 10 latest alerts related to the scammer.

13. The method according to the claims from 5 to 12, **characterized in that** the report a fraud form in WEB interface where a registered user (a fraud/scam victim) can create a scam/fraud alert, allows you to enter the following information:
a. Name of the scammer (company or person).
b. The scam alert name.
c. Description of the event.
d. Location of the event.
e. Date of the event.
f. Monetary damages caused by the event.
g. Images, photos documenting an event.
h. Category of the event.

14. The method according to the claims from 5 to 13 the information from the repository is available for users around the world, provided the connection with the appropriate portal and the establishment of the personal account.
